(19) Europäisches Patentamt
European Patent Office
Office européen des brevets

(11) EP 1 260 544 B1

(12) EUROPEAN PATENT SPECIFICATION

(45) Date of publication and mention of the grant of the patent:
**09.05.2007 Bulletin 2007/19**

(51) Int Cl.:
*C08K 3/26* (2006.01) *C08L 21/00* (2006.01)
*B60C 1/00* (2006.01)

(21) Application number: **02011362.7**

(22) Date of filing: **23.05.2002**

# (54) Rubber composition for tire tread and pneumatic tire using the same

Kautschukzusammensetzung für Reifenlauffläche und Reifen daraus

Composition de caoutchouc pour bande de roulement de pneu et pneu utlisant celle-ci

(84) Designated Contracting States:
**DE FR GB**

(30) Priority: **24.05.2001 JP 2001155667**
**05.06.2001 JP 2001169703**
**22.10.2001 JP 2001323879**

(43) Date of publication of application:
**27.11.2002 Bulletin 2002/48**

(73) Proprietor: **Sumitomo Rubber Industries, Ltd.**
**Kobe-shi,**
**Hyogo-ken (JP)**

(72) Inventors:
- **Yagi, Noriko,**
  **Sumitomo Rubber Ind., Ltd.**
  **Kobe-shi,**
  **Hyogo-ken (JP)**
- **Muraoka, Kiyoshige Sumitomo Rubber Ind.**
  **Kobe-shi,**
  **Hyogo-ken (JP)**

(74) Representative: **Manitz, Finsterwald & Partner GbR**
**Postfach 31 02 20**
**80102 München (DE)**

(56) References cited:
**EP-A- 0 933 391** **DE-A- 19 739 475**
**US-A- 6 075 092**

- **ANONYMOUS: "19991 Annual Book of ASTM Standards, Vol. 09.01" 1991, ASTM , PHILADELPHIA * page 317; table ***
- **ANONYMOUS: "PPG Industries Silica Products"[Online] Retrieved from the Internet: URL:www.ppg.com/ chm_silicas/hisiltire.htm> [retrieved on 2005-05-27]**
- **ANONYMOUS: "Atomite (Calcium Carbonate) Powder"[Online] Retrieved from the Internet: URL:www.eagerplastics.com/atom.htm> [retrieved on 2005-05-27]**
- **S.J. GREGG, K.S.W. SING: "Adsorption, Surface Area and Porosity, 2nd Ed." 1982, ACADEMIC PRESS , LONDON * page 21, paragraph 2 ***

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

The present invention relates to a rubber composition for tire tread and a pneumatic tire using the same. More specifically, the present invention relates to a rubber composition for tire tread having remarkably improved grip performance on wet road while maintaining processability, abrasion resistance and fuel efficiency, and a pneumatic tire using the rubber composition for the tread part.

In recent years, a wide variety of properties such as steering stability, abrasion resistance, ride quality as well as fuel efficiency have been required for automobile tires and various ideas are suggested in order to improve these performances.

For example, it is tried to improve grip performance on road for the purpose of improving controllability and steering stability on wet road at high-speed running, or to improve cornering properties by increasing block rigidity of tire tread pattern, and then preventing block deformation in case of cornering. It is also devised to inhibit deformation of groove so that excellent drainage is achieved to prevent hydroplaining.

Recently, grip performance on wet road is increased by compounding silica to a high styrene-content styrene-butadiene rubber (SBR) in order to meet the demand for such properties.

However, it is said that the above rubber composition for tire tread cannot exhibit sufficient grip performance on wet road or semi-wet road in high road temperature range of over 15°C, though the grip performance can be increased in low road temperature range of at most 15°C. Furthermore, it has been found that when running is carried on, the rubber composition containing silica shows decrease of rubber rigidity, resulting in remarkable decrease of grip performance. In addition, when dispersion of silica particles into rubber is insufficient, Mooney viscosity of the rubber composition is increased, causing problems that processability such as extrusion is poor.

In order to solve these problems, various suggestions have been made so far. For example, Japanese Unexamined Patent Publication Nos. 133375/1995 and 311245/1996 disclose a rubber composition obtained by compounding sintered clay to a diene rubber; and Japanese Unexamined Patent Publication No. 3373/1996 discloses a rubber composition obtained by compounding vulcanized rubber powder comprising a diene rubber and kaolinite to a particular diene rubber. It is now described that these rubber compositions have an effect on improvement of grip performance.

In addition, Japanese Unexamined Patent Publication Nos. 59893/1996 and 59894/1996 disclose a rubber composition obtained by compounding inorganic compound powder of a particular composition and carbon black to SBR containing a particular amount of styrene; and Japanese Unexamined Patent Publication Nos. 149954/1995 and 31250/1997 disclose a rubber composition obtained by compounding clay comprising kaolinite as a main component to a diene rubber whose rate of 1,2-bond in butadiene part is in a particular range. It is described that these rubber compositions also have a similar effect on improvement of grip performance.

US 6,075,092 discloses a rubber composition comprising 100 parts by weight of a diene rubber and 0.1 to 25 parts by weight of a polyether-based polymer.

German patent application 197 39 475 A1 discloses a tire in which the tread consists of a rubber mixture containing a rubber component with carbon black and silica as reinforcing substances.

EP 0 933 391 A1 relates to a rubber composition containing relatively low levels of carbon black and/or silica reinforcement together with a particulate calcium carbonate and selected modifiers.

However, at present, no rubber composition has yet been produced which has excellent wet grip performance while maintaining low heat build-up characteristics without lowering of abrasion resistance.

In addition, among the above properties, grip performance and rolling resistance property (fuel efficiency) in particular are properties related to hysteresis loss of a rubber. Generally, the larger the hysteresis loss is, the higher the grip performance is and the more improved the controllability is, but rolling resistance is increased at the same time, resulting in increase of fuel consumption.

In this way, grip performance and rolling resistance property are incompatible, and therefore various rubber compositions for tire are suggested in order to achieve both properties simultaneously. For example, since polymers and carbon black have a great influence on both properties in the rubber composition for tire, it is tried to improve both the rolling resistance property and the grip performance by suitably selecting the rate of combined styrene and the rate of 1,2-bond of butadiene part when a styrene-butadiene copolymer is used as a polymer. And in case of carbon black, the amount of carbon black is reduced or the particle diameter of carbon black is enlarged. In these methods, however, it is difficult to achieve compatibility between low heat build-up characteristics and reinforcing ability, and abrasion resistance. Accordingly, carbon black whose activity degree of particle surface is optimized is used at present.

On the other hand, there are many reports on the method of using silica and a silane coupling agent in order to achieve low heat build-up characteristics.

However, surface properties of inorganic compound powder such as silica have a great influence on rubber composition and often prevent the intended performance from being achieved to a remarkable degree. For example, since a silanol group, i.e., the surface functional group of silica forms a hydrogen bond, silica particles tend to coagulate with each other, causing problems such as lowering of mechanical strength and weakening of materials as well as

remarkable decrease of workability.

In order to solve these problems, it has been tried to use various coupling agents, dispersion agents or surface modifiers. For example, it is considered that a sliane coupling agent combines to silanol group on the silica surface to prevent silica particles from coagulating with each other, resulting in improvement of processability. However, silane coupling agents are expensive, and can combine to some limited kinds of inorganic compounds such as silica, glass fiber and alumina owing to the characteristics of its functional group, and there has been a problem that the silane coupling agent is not effective for poorly reactive compounds such as titanium oxide, calcium carbonate, carbon black and graphite.

Other inexpensive dispersion agents and surface modifiers for inorganic compounds include an anionic, cationic or nonionic low molecular weight surfactant and fatty acid, but they have a problem that covering ability for inorganic compound is poor.

As mentioned above, the fact is that there is no rubber composition at present, which has improved dispersability of inorganic compound powder and excellent wet grip performance while maintaining abrasion resistance and low heat build-up characteristics without lowering of workability and processability.

The present invention relates to a rubber composition for tire tread comprising,

5 to 120 parts by weight of calcium carbonate,
at least 5 parts by weight of silica having nitrogen adsorption specific surface area of 100 to 300 $m^2/g$, and
at least 1 part by weight of carbon black having nitrogen adsorption specific surface area of 70 to 300 $m^2/g$,
based on 100 parts by weight of a rubber component,
said rubber composition further comprising, based on the weight of calcium carbonate, 0.1 to 150 % by weight of a polyether compound having a repeating unit represented by the following formula (II):

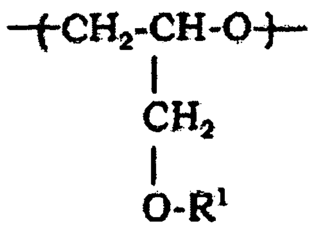

(II)

wherein $R^1$ is a hydrogen atom or a substituent selected from the group consisting of a hydrocarbon group having 1 to 50 carbon atoms, a siloxy silyl propyl group having 1 to 50 silicon atoms and a group represented by the formula $-(AO)_m-R^2$, and $R^1$ may be one kind or different kinds; and in the formula, $R^2$ is a hydrogen atom or a substituent selected from the group consisting of a hydrocarbon group having 1 to 42 carbon atoms and a siloxy silyl propyl group having 1 to 40 silicon atoms, A is an alkylene group having 2 to 3 carbon atoms, m is an integer of 1 to 100 and A, the number of which is represented by m, may be the same or different.

It is preferable that the total amount of calcium carbonate, silica and carbon black is between 50 and 150 parts by weight.

It is preferable that the total amount of calcium carbonate, silica and carbon black is 50 to 150 parts by weight.

It is preferable that calcium carbonate has nitrogen adsorption specific surface area of at least 5 $m^2/g$.

It is preferable that calcium carbonate has an average particle diameter of 0.01 to 50 μm.

It is preferable that the rubber composition further comprises a silane coupling agent.

It is preferable that the silane coupling agent is used in an amount of 1 to 20 % by weight based on the weight of calcium carbonate and silica.

It is preferable that the silane coupling agent is one represented by the following formula (I):

$$(C_nH_{2n+1}O)_3\text{-Si-}(CH_2)_m\text{-}S_x\text{-}(CH_2)_m\text{-Si-}(OC_nH_{2n+1})_3 \qquad (I)$$

wherein n is an integer of 1 to 3, m is an integer of 1 to 4 and x is the number of sulfur atoms in the polysulfide part, an average of x being 2.1 to 4.

It is preferable that the rubber composition for tire tread is obtained by kneading the rubber component, calcium carbonate, silica, carbon black, silane coupling agent and polyether compound simultaneously at kneading temperature of 120° to 200°C.

The present invention also relates to a pneumatic tire obtained by using the rubber composition for tire tread.

The present invention is explained in detail below.

The rubber component used in the present invention means a synthetic diene rubber or a mixed rubber comprising a synthetic diene rubber and a natural rubber. Examples of synthetic diene rubbers to be used in the present invention include styrene-butadiene rubber (SBR), butadiene rubber (BR), isoprene rubber (IR), ethylene-propylene-diene rubber (EPDM), chloroprene rubber (CR), acrylonitrile-butadiene rubber (NBR), butyl rubber (IIR) and the like. The rubber may be used alone or in combination of two or more.

It is preferable that the rubber component contains at least 20 % by weight of a styrene-butadiene rubber from the viewpoint of workability. The amount of the styrene-butadiene rubber in the rubber component is preferably 20 to 100 % by weight, more preferably 30 to 100 % by weight, most preferably 40 to 100 % by weight. The amount of less than 20 % by weight is not preferable since sufficient grip performance cannot be obtained. It is possible to use any styrene-butadiene rubber which is prepared by any polymerization method such as emulsion polymerization or solution polymerization.

The rubber composition of the present invention contains calcium carbonate. Preferable calcium carbonate is ultrafine calcium carbonate having nitrogen adsorption specific area (BET specific area) of at least 5 $m^2/g$, preferably at least 10 $m^2/g$. Calcium carbonate having nitrogen adsorption specific area of less than 5 $m^2/g$ is not preferable since there is a tendency that reinforcing ability cannot be exhibited sufficiently and abrasion resistance of the rubber composition is decreased. The nitrogen adsorption specific area is preferably at most 100 $m^2/g$, more preferably at most 80 $m^2/g$. When the nitrogen adsorption specific area is more than 100 $m^2/g$, workability tends to decrease.

The amount of calcium carbonate is 5 to 120 parts by weight, more preferably 10 to 100 parts by weight, further preferably 10 to 80 parts by weight, particularly 10 to 65 parts by weight, especially 10 to 50 parts by weight, and most preferably 10 to 40 parts by weight based on 100 parts by weight of the rubber component. When the amount is less than 5 parts by weight, the improvement effect on wet grip performance tends to be small. When the amount is more than 150 parts by weight, the amount is not preferable since abrasion resistance tends to decrease.

The average particle diameter of calcium carbonate is preferably 0.01 to 50 $\mu$m, more preferably 0.01 to 10 $\mu$m, most preferably 0.02 to 8 $\mu$m. When the average particle diameter is less than 0.01 $\mu$m, workability tends to decrease. When the average particle diameter is more than 50 $\mu$m, reinforcing ability is lowered to deteriorate properties such as abrasion resistance.

Among the above calcium carbonates, activated calcium carbonate obtained by surface treatment using an organic material is preferable from the viewpoint of improving dispersability to the rubber. Organic materials used for the surface treatment are not particularly limited as long as they are generally used for surface treatment of calcium carbonate. Examples thereof include fatty acids, resin acids and surfactants.

The rubber composition of the present invention contains silica, and it is used to lower rolling resistance as well as to fill up the insufficient reinforcing ability in case of calcium carbonate. Silica used in the present invention has nitrogen adsorption specific area of 100 to 300 $m^2/g$, preferably 130 to 280 $m^2/g$, more preferably 150 to 250 $m^2/g$. When the nitrogen adsorption specific area of silica is less than 100 $m^2/g$, reinforcing ability tends to be smaller. When the nitrogen adsorption specific area of silica is more than 300 $m^2/g$, such silica is not preferable since there is a tendency that dispersability is decreased to increase heat build-up characteristics of the rubber composition.

Examples of silica are not particularly limited, and they are suitably selected from dry method silica or wet method silica which have been conventionally used for the reinforcement of rubbers.

The amount of silica is at least 5 parts by weight, preferably at least 10 parts by weight, more preferably at least 15 parts by weight based on 100 parts by weight of the rubber component. When the amount of silica is less than 5 parts by weight, the amount is not preferable since there is a tendency that the reinforcing effect and the effect to lower the rolling resistance of the rubber composition cannot be obtained sufficiently. When the amount is more than 100 parts by weight, workability tends to decrease. For these reasons, the upper limit of the amount of silica is preferably at most 80 parts by weight, more preferably at most 75 parts by weight, further preferably at most 70 parts by weight and most preferably at most 65 parts by weight.

The rubber composition of the present invention contains carbon black. Carbon black used in the present invention has nitrogen adsorption specific area of 70 to 300 $m^2/g$, preferably 90 to 280 $m^2/g$, more preferably 90 to 250 $m^2/g$, further preferably 100 to 250 $m^2/g$, most preferably 100 to 230 $m^2/g$. When carbon black has nitrogen adsorption specific area of less than 70 $m^2/g$, there is a tendency that sufficient reinforcing ability and abrasion resistance cannot be easily obtained. When carbon black has nitrogen adsorption specific area of more than 300 $m^2/g$, such carbon black is not preferable since there is a tendency that dispersability is decreased to increase heat build-up characteristic of the rubber composition. Examples of carbon black are HAF, ISAF and SAF, but not particularly limited thereto.

The amount of carbon black used in the present invention is at least 1 part by weight based on 100 parts of the rubber component. When the amount of carbon black is less than 1 part by weight, reinforcing ability and abrasion resistance tend to decrease. When the amount is more than 150 parts by weight, not only dispersability is decreased but also desirable properties cannot be obtained. The lower limit of the amount of carbon black is 1 part by weight,

preferably 5 parts by weight, more preferably 10 parts by weight, most preferably 15 parts by weight. The upper limit of the amount of carbon black is 150 parts by weight, preferably 120 parts by weight, more preferably 100 parts by weight, further preferably 85 parts by weight, particularly 70 parts by weight and most preferably 65 parts by weight.

In case where the rubber composition of the present invention comprises, for example, 5 to 150 parts by weight of calcium carbonate, at least 5 parts by weight of silica and at least 1 part by weight of carbon black based on 100 parts by weight of the rubber component, the total amount of calcium carbonate, silica and carbon black is preferably within the range of 50 to 150 parts by weight. When the total amount is less than 50 parts by weight, the effect of adding calcium carbonate to lower heat build-up characteristics tends to be insufficient. When the total amount is more than 150 parts by weight, dispersability tends to decrease. The upper limit of the total amount is more preferably 120 parts by weight, most preferably 100 parts by weight, and the lower limit of the total amount is more preferably 55 parts by weight, most preferably 60 parts by weight from the viewpoint of reinforcing ability and properties of the rubber composition.

Furthermore, in case where the rubber composition comprises, for example, 5 to 80 parts by weight of calcium carbonate, 5 to 100 parts by weight of silica and 5 to 145 parts by weight of carbon black based on 100 parts by weight of the rubber component, the total amount of silica and carbon black is preferably within the range of 50 to 150 parts by weight. When the total amount is less than 50 parts by weight, the effect of adding calcium carbonate to lower heat build-up characteristics tends to be insufficient. When the total amount is more than 150 parts by weight, dispersability tends to decrease. The upper limit of the total amount is more preferably 100 parts by weight, and the lower limit of the total amount is more preferably 55 parts by weight from the viewpoint of reinforcing ability and properties of the rubber composition.

The rubber composition of the present invention contains preferably a silane coupling agent in order to enhance the bonding of fillers (calcium carbonate, silica and carbon black) to the rubber composition to improve abrasion resistance. For the silane coupling agent used in the present invention, it is possible to choose any conventional silane coupling agent which has been used in case of using silica as a filler.

Examples of silane coupling agents of the present invention are sulfide coupling agents such as bis(3-triethoxysilylpropyl)polysulfide, bis(2-triethoxysilylethyl)polysulfide, bis(3-trimethoxysilylpropyl)polysulfide, bis(2-trimethoxysilylethyl)polysulfide, bis(4-triethoxysilylbutyl)polysulfide and bis(4-trimethoxysilylbutyl)polysulfide, represented by the following formula (I):

$$(C_nH_{2n+1}O)_3\text{-Si-}(CH_2)_m\text{-}S_x\text{-}(CH_2)_m\text{-Si-}(OC_nH_{2n+1})_3 \qquad \text{(I)}$$

wherein n is an integer of 1 to 3, m is an integer of 1 to 4 and x is the number of sulfur atoms in the polysulfide part, an average of x being 2.1 to 4, sulfide coupling agents such as 3-trimethoxysilylpropyl-N,N-dimethylthiocarbamoyltetrasulfide, 3-triethoxysilylpropyl-N,N-dimemthylthiocarbamoyltetrasulfide, 2-triethoxysilylethyl-N,N-dimethylthiocarbamoyltetrasulfide, 2-trimethoxysilylethyl-N,N-dimethylthiocarbamoyltetrasulfide, 3-trimethoxysilylpropylbenzothiazolyltetrasulfide, 3-triethoxysilylpropylbenzothiazoltetrasulfide, 3-triethoxysilylpropylmethacrylatemonosulfide and 3-trimethoxysilylpropylmethacrylatemonosulfide; mercapto coupling agents such as 3-mercaptopropyltrimethoxysilane, 3-mercaptopropyltriethoxysilane, 2-mercaptoethyltrimethoxysilane and 2-mercaptoethyltriethoxysilane; vinyl coupling agents such as vinyltriethoxysilane and vinyltrimethoxysilane; amino coupling agents such as 3-aminopropyltriethoxysilane, 3-aminopropyltrimethoxysilane, 3-(2-aminoethyl)aminopropyltriethoxysilane, and 3-(2-aminoethyl)aminopropyltrimethoxysilane; glycidoxy coupling agents such as γ-glycidoxypropyltriethoxysilane, γ-glycidoxypropyltrimethoxysilane, γ-glycidoxypropylmethyldiethoxysilane and γ-glycidoxypropylmethyl dimethoxysilane; nitro coupling agents such as 3-nitropropyltrimethoxysilane and 3-nitoropropyltriethoxysilane; chloro coupling agents such as 3-chloropropyltrimethoxysilane, 3-chloropropyltriethoxysilane, 2-chloroethyltrimethoxysilane and 2-chloroethyltriethoxysilane; and the like. Among these, bis(3-triethoxysilylpropyl)polysulfide, 3-mercaptopropyltrimethoxysilane, 3-aminopropyltrimethoxysilane and vinyltriethoxysilane are suitably used from the viewpoint that the effect of adding the coupling agent is balanced with the costs.

More concrete examples of silane coupling agents represented by the formula (I) are bis(3-triethoxysilylpropyl) tetraslufide, bis(2-triethoxysilylethyl) tetraslufide, bis(3-trimethoxysilylpropyl) tetrasulfide, bis(2-trimethoxysilylethyl) tetraslufide, bis(3-triethoxysilylpropyl)trisulfide, bis(3-trimethoxysilylpropyl)trisulfide, bis(3-triethoxysilylpropyl)disulfide and bis(3-trimethoxysilylpropyl)disulfide. Among these, bis(3-triethoxysilylpropyl)tetrasulfide is suitably used from the viewpoint that the effect of adding the coupling agent is balanced with the costs.

The silane coupling agent may be used alone or in combination of two or more.

The amount of the silane coupling agent is preferably 1 to 20 % by weight based on the total amount of calcium carbonate and silica. When the amount of the silane coupling agent is less than 1 % by weight, the effect of adding the silane coupling agent tends to be insufficient. When the amount of the silane coupling agent is more than 20 % by weight, the coupling effect cannot be obtained though costs are increased, and reinforcing ability as well as abrasion resistance tend to decrease. From the viewpoint of dispersiability and coupling effect, the lower limit of the amount of the silane coupling agent is preferably 2 % by weight and the upper limit thereof is preferably 15 % by weight.

The amount of the silane coupling agent is preferably 1 to 20 % by weight based on the weight of silica. When the amount of the silane coupling agent is less than 1 % by weight, the effect of adding the silane coupling agent tends to be insufficient. Again, when the amount of the silane coupling agent is more than 20 % by weight, the coupling effect cannot be obtained though costs are increased, and reinforcing ability as well as abrasion resistance tend to decrease. From the viewpoint of dispersiability and coupling effect, the lower limit of the amount of the silane coupling agent is preferably 2 % by weight and the upper limit thereof is preferably 15 % by weight.

The polyether compound to be used in the present invention comprises repeating units represented by the following formula (II):

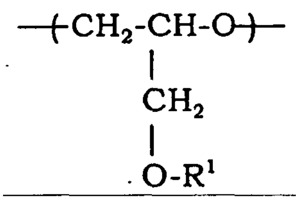

(II)

wherein $R^1$ is a hydrogen atom or a substituent selected from the group consisting of a hydrocarbon group having 1 to 50 carbon atoms, a siloxy silyl propyl group having 1 to 50 silicon atoms and a group represented by the formula $-(AO)_m-R^2$, and $R^1$ may be one kind or different kinds; and in the formula, $R^2$ is a hydrogen atom or a substituent selected from the group consisting of a hydrocarbon group having 1 to 42 carbon atoms and a siloxy silyl propyl group having 1 to 40 silicon atoms, A is an alkylene group having 2 to 3 carbon atoms, m is an integer of 1 to 100 and A, the number of which is represented by m, may be the same or different.

When $R^1$ in the formula (II) is a hydrocarbon group, preferable examples of $R^1$ are an alkyl group or an alkenyl group having 1 to 42 carbon atoms, an aryl group having 6 to 42 carbon atoms, or an aryl alkyl group or alkyl aryl group having 7 to 43 carbon atoms. More preferable examples thereof are an alkyl group having 1 to 30 carbon atoms, such as methyl group, ethyl group, n-propyl group, isopropyl group, n-butyl group, t-butyl group, octyl group, decyl group, dodecyl group, cetyl group or stearyl group; an alkenyl group having 2 to 30 carbon atoms such as allyl group; an aryl group having 6 to 30 carbon atoms such as phenyl group; an alkyl aryl group having 7 to 31 carbon atoms such as nonyl phenyl group; and the like. When $R^1$ contains too many carbon atoms, dispersion effect and surface modification effect on calcium carbonate tend to decrease.

When $R^1$ is a siloxy silyl propyl group, preferable examples of $R^1$ are a linear or branched siloxy silyl propyl group having 1 to 30, particularly 1 to 20 silicon atoms. The alkyl substituent which binds to silicon atoms of the siloxy silyl propyl group may be the same or different, and examples thereof are methyl group, butyl group, vinyl group, phenyl group and the like.

In the above formula (II), $R^1$ may have a substituent, and examples thereof are hydroxy group, alkoxy group (having 1 to 30 carbon atoms), amino group, dimethyl amino group, diethyl amino group, amido group (having 1 to 18 carbon atoms), trialkyl ammonium group (whose alkyl group has 1 to 30 carbon atoms), dialkyl ammonium group (whose alkyl group has 1 to 30 carbon atoms), alkyl ammonium group (whose alkyl group has 1 to 30 carbon atoms), ammonium group, methyl ester group, ethyl ester group, carboxyl group, acyl group (having 1 to 18 carbon atoms), silyl group, siloxy group and the like (hereinafter referred to as "substituents of the present invention").

When $R^1$ is a group represented by the formula $-(AO)_m-R^2$ and $R^2$ is a hydrocarbon group, preferable examples of $R^2$ are methyl group, ethyl group, n-butyl group, t-butyl group, octyl group, decyl group, dodecyl group, cetyl group, stearyl group, phenyl group, nonyl phenyl group and the like.

When $R^2$ is a siloxy silyl propyl group, preferable examples of $R^2$ are a siloxy silyl propyl group having 1 to 20 silicon atoms. The alkyl substituent which binds to silicon atoms of the siloxy silyl propyl group may be the same or different, and examples thereof are methyl group, butyl group, vinyl group, phenyl group and the like.

$R^2$ may have a substituent, and examples thereof are the substituents of the present invention.

Furthermore, examples of A are ethylene group and propylene group. Preferably, m is an integer of 1 to 50, more preferably an integer of 5 to 10.

The polyether compound (II) of the present invention is obtained by polymerizing an epoxy compound represented by the formula (III) alone or co-polymerizing the epoxy compound with another monomer (X). That is, the polyether compound (III) is obtained by either of the following reaction formulae:

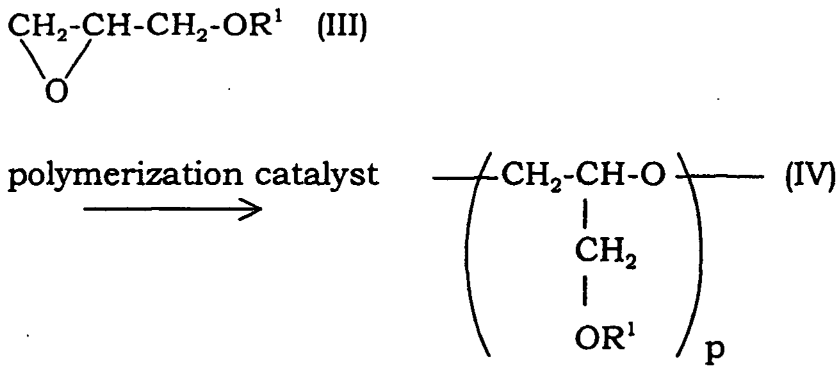


(III) (IV)

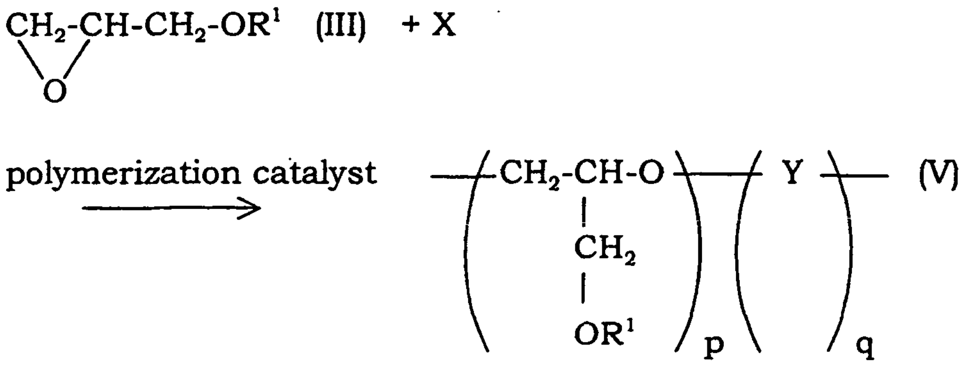


(III) (V)

wherein $R^1$ is as defined above, X represents another monomer copolymerizable with substituted epoxide (III), Y represents a polymerization unit derived from the monomer X and p and q represent repeating of each polymerization unit.

In these cases, p is preferably 5 to 2,000,000. When p is less than 5, covering ability for calcium carbonate tends to be decreased. When p is more than 2,000,000, dispersability of the polyether compound itself is decreased and therefore its surface modification effect on calcium carbonate tends to decrease. More preferably, the lower limit of p is 10 and the upper limit of p is 1,000,000, particularly 100,000. In case of using X, q is not 0, and preferably 1 to 100,000.

In the polyether compounds (IV) and (V), $R^1$ may be different kinds. In that case, sequence thereof in the polyether main chain may be any of block sequence, alternate sequence or random sequence. The sequence of the polymerization unit Y in the compound (VI) may also be any of block sequence, alternate sequence or random sequence.

Examples of monomer X are an ethylene oxide, a substituted epoxide other than the substituted epoxide (III) or an anionic polymerizable monomer other than epoxides. Preferable examples thereof are ethylene oxide, propylene oxide, alkylene oxide having 4 to 22 carbon atoms, 3-perfluoroalkyl-1,2-epoxypropane, lactones with four rings, six rings or seven rings, carbonates with five rings or six rings, lactams, hexamethylcyclotrisiloxane, octamethylcyclotetrasiloxane, (meth)acrylic acid esters such as methyl (meth)acrylate, styrene, butadiene, isoprene, end olefins having 5 to 22 carbon atoms and the like.

The amount of the polyether compound used in the present invention is preferably 0.1 to 150 % by weight based on the weight of calcium carbonate. When the amount of the polyether compound is less than 0.1 % by weight, there is a tendency that sufficient dispersion effect cannot be obtained. When the amount is more than 150 % by weight, there is a tendency that dispersion effect cannot be obtained though the costs are increased. The lower limit of the amount of the polyether compound is more preferably 0.5 % by weight. The upper limit of the amount of the polyether compound is more preferably 100 % by weight, most preferably 80 % by weight.

The polyether compound of the present invention may be used alone or in combination of two or more. Additionally, it is possible to use known surface modifiers, dispersion agents, surfactants or coupling agents at the same time.

It is preferable that the rubber composition of the present invention is obtained by kneading the above mentioned rubber component, calcium carbonate, silica, carbon black, silane coupling agent and polyether compound simultaneously at kneading temperature of 120° to 200°C in a mixing step. When the kneading temperature is lower than 120°C, reactivity of the silane coupling agent is low and there is a tendency that sufficient properties cannot be achieved. When the kneading temperature is more than 200°C, the rubber tends to be burned. The lower limit of the kneading temperature

is more preferably 140°C and the upper limit of the kneading temperature is more preferably 180°C.

In the above mixing step, kneading time may be adjusted to 3 to 15 minutes. When the kneading time is shorter than 3 minutes, dispersion of calcium carbonate, silica and carbon black tends to be insufficient. When the kneading time is longer than 15 minutes, the molecular weight of the rubber component tends to decrease.

The pneumatic tire of the present invention is prepared by a normal process using the rubber composition of the present invention for the tread part. That is, the rubber composition is extruded and processed so that it matches with shapes of each tire part without vulcanization; the processed composition is then formed into tread on a tire forming machine in a usual manner to obtain an unvulcanized tire; and the unvulcanized tire is press heated in a vulcanizing machine to prepare a tire.

Further, inorganic compound powder and any agents such as softeners, antioxidants, vulcanizing agents, vulcanization accelerators and auxiliary vulcanization activators which are used in the normal rubber industry may be suitably added, if necessary, to the rubber composition of the present invention in addition to the above rubber component, carbon black, silica, silane coupling agent, calcium carbonate and polyether compound.

However, it is preferable to compound vulcanizing agents and vulcanization accelerators and knead the components together, after the kneading of other components.

The rubber composition of the present invention enables to improve low heat build-up characteristics and wet grip performance without lowering processability and abrasion resistance, and can be suitably used for tire tread.

The present invention is explained in detail based on Examples below, but not limited thereto.

Materials used in Examples and Comparative Examples are listed below.

(Chemicals)

SBR: SBR 1502 (a styrene-butadiene copolymer) available from JSR Corporation
Calcium carbonate: Hakuenka CC available from SHIRAISHI KOGYO KAISHA LTD. (treated with fatty acid; nitrogen adsorption specific area: 26 $m^2/g$; average particle diameter: 0.04 $\mu m$)
Carbon black : SHOBLACK N220 (nitrogen adsorption specific area: 125 $m^2/g$) available from Showa Cabot Co. Ltd.
Silica: Ultrasil VN 3 available from Degussa Co. (nitrogen adsorption specific area: 210 $m^2/g$)
Silane coupling agent: Si69 (bis(3-triethoxysilylpropyl)tetrasulfide) available from Degussa Co.
Aromatic oil: JOMO Process X140 available from Japan Energy Corporation
Antioxidant: Nocluc 6C (N-(1,3-dimethyl butyl)-N'-phenyl-p-phenylenediamine) available from Ohuchi Shinko Kagaku Kogyo Co. Ltd.
Stearic acid: stearic acid available from NOF Corporation
Zinc oxide: zinc oxide No. 1 available from Mitsui Mining and Smelting Co., Ltd.
Sulfur: powdery sulfur available from Tsurumi Chemicals Co., Ltd.
Vulcanization accelerator TBBS: Nocceler NS (N-tert-butyl-2-benzothiazylsulfenamide) available from Ohuchi Shinko Kagaku Kogyo Co. Ltd.
Vulcanization accelerator DPG: Nocceler D (N,N'-diphenylguanidine) available from Ohuchi Shinko Kagaku Kogyo Co. Ltd.

EMBODIMENT 1

COMPARATIVE EXAMPLES 1 to 6

Components in Table 1 other than sulfur, vulcanization accelerator TBBS and vulcanization accelerator DPG were kneaded at 150°C for 4 minutes. Then sulfur, TBBS and DPG were added thereto and the mixture was kneaded at roll temperature of 20°C for 5 minutes to obtain samples of the rubber composition. The compounds were press-vulcanized at 170°C for 20 minutes to obtain vulcanized materials. Each of the obtained samples was subjected to the following property tests.

[Tests]

(Abrasion test)

Using a Lambourne abrasion tester, the Lambourne abrasion amount was measured at 20°C under a load of 2.5 kgf and a slip ratio of 20 % for 5 minutes, and volume loss values of each compound were calculated. The calculated value was represented as an index to the loss value of Comparative Example 4 as 100 according to the following

equation. The larger the index is, the more excellent the abrasion resistance is.

$$(\text{abrasion index}) = (\text{loss value of Comparative Example 1}) \div (\text{loss value of each compound}) \times 100$$

(Rolling resistance index)

The loss tangent (tan δ) of each compound was measured by using a viscoelasticity spectrometer VES (made by Iwamoto Corporation) at 70°C under initial strain of 10 % and dynamic strain of 2 %. The loss tangent value of each compound was represented as an index to the tan δ value of Comparative Example 4 as 100 according to the following equation. The larger the index is, the more excellent the rolling resistance property is and the lower heat build-up characteristic is.

$$(\text{rolling resistance index}) = (\tan\delta \text{ of Comparative Example 1}) \div (\tan\delta \text{ of each compound}) \times 100$$

(Wet skid test)

The wet skid resistance was measured according to the method of ASTM E303-83 using a portable skid tester made by Stanley Inc. The wet skid resistance value was represented as an index to the measured value of Comparative Example 4 as 100 according to the following equation. The larger the index is, the more excellent the wet skid performance is.

$$(\text{wet skid index}) = (\text{wet skid resistance of each compound}) \div (\text{wet skid resistance of Comparative Example 1}) \times 100$$

The results are shown in Table 1. Wet skid performance was improved without lowering of abrasion resistance and rolling resistance property in case of Comparative Examples 1 to 3 where all of carbon black, calciumcarbonate, silica and silane coupling agent are compounded to SBR in particular amounts.

TABLE 1

| | | Com. Ex. No. | | | Com. Ex. No. | | |
|---|---|---|---|---|---|---|---|
| | | 1 | 2 | 3 | 4 | 5 | 6 |
| Compound (part by weight) | SBR1502 | 100 | 100 | 100 | 100 | 100 | 100 |
| | Calcium carbonate | 5 | 15 | 30 | - | - | - |
| | Silica | 30 | 20 | 20 | 60 | - | 30 |
| | Carbon black | 25 | 25 | 25 | - | 60 | 30 |
| | Si 69 | 3.5 | 3.5 | 5 | 6 | - | 3 |
| | Aromatic oil | 8 | 8 | 8 | 20 | 20 | 20 |
| | Antioxidant | 1 | 1 | 1 | 1 | 1 | 1 |
| | Stearic acid | 2 | 2 | 2 | 2 | 2 | 2 |
| | Zinc oxide | 3 | 3 | 3 | 3 | 3 | 3 |
| | Sulfur | 1.5 | 1.5 | 1.5 | 1.5 | 1.5 | 1.5 |
| | Vulcanization Accelerator TBBS | 1 | 1 | 1 | 1 | 1 | 1 |
| | Vulcanization Accelerator DPG | 0.5 | 0.5 | 0.5 | 0.5 | 0.5 | 0.5 |

(continued)

| | | Com. Ex. No. | | | Com. Ex. No. | | |
|---|---|---|---|---|---|---|---|
| | | 1 | 2 | 3 | 4 | 5 | 6 |
| Properties | Abrasion resistance index | 105 | 106 | 103 | 100 | 112 | 105 |
| | Rolling resistance index | 102 | 104 | 108 | 100 | 90 | 95 |
| | Wet skid index | 105 | 108 | 112 | 100 | 85 | 91 |

EMBODIMENT 2

COMPARATIVE EXAMPLES 7 to 13

Components in Table 2 other than sulfur and vulcanization accelerator TBBS and vulcanization accelerator DPG were kneaded at 150°C for 4 minutes. Then, sulfur, TBBS and DPG were added thereto and the mixture was kneaded at roll temperature of 20°C for 5 minutes to obtain samples of the rubber composition. The compounds were press-vulcanized at 170°C for 20 minutes to obtain vulcanized materials. Each of the obtained samples was subjected to the following property tests.

[Tests]

(Abrasion test)

Evaluation was made in the same manner as in Embodiment 1 except that the loss value of Comparative Example 10 was assumed to be 100.

(Rolling resistance index)

Evaluation was made in the same manner as in Embodiment 1 except that the tan δ value of Comparative Example 10 was assumed to be 100.

(Wet skid test)

Evaluation was made in the same manner as in Embodiment 1 except that the measured value of Comparative Example 10 was assumed to be 100.

The results are shown in Table 2. Wet skid performance was improved without lowering of abrasion resistance and rolling resistance property in case of Examples 7 to 9 where all of carbon black, calciumcarbonate, silica and silane coupling agent are compounded to SBR in particular amounts.

TABLE 2

| | | Com. Ex. No. | | | Com. Ex. No. | | | |
|---|---|---|---|---|---|---|---|---|
| | | 7 | 8 | 9 | 10 | 11 | 12 | 13 |
| Compound (part by weight) | SBR1502 | 100 | 100 | 100 | 100 | 100 | 100 | 100 |
| | Calcium carbonate | 20 | 20 | 20 | - | - | 20 | 20 |
| | Silica | 10 | 15 | 5 | - | 60 | - | - |
| | Carbon black | 40 | 40 | 40 | 60 | - | 40 | 40 |
| | Si 69 | 2.4 | 2.8 | 2 | - | 6 | - | 1.6 |
| | Aromatic oil | 8 | 8 | 8 | 15 | 15 | 15 | 8 |
| | Antioxidant | 1 | 1 | 1 | 1 | 1 | 1 | 1 |
| | Stearic acid | 2 | 2 | 2 | 2 | 2 | 2 | 2 |
| | Zinc oxide | 3 | 3 | 3 | 3 | 3 | 3 | 3 |
| | Sulfur | 1.5 | 1.5 | 1.5 | 1.5 | 1.5 | 1.5 | 1.5 |
| | Vulcanization Accelerator TBBS | 1 | 1 | 1 | 1 | 1 | 1 | 1 |
| | Vulcanization Accelerator DPG | 0.5 | 0.5 | 0.5 | 0.5 | 0.5 | 0.5 | 0.5 |
| | Abrasion resistance index | 103 | 104 | 102 | 100 | 90 | 96 | 100 |

(continued)

| | | Com. Ex. No. | | | Com. Ex. No. | | | |
|---|---|---|---|---|---|---|---|---|
| | | 7 | 8 | 9 | 10 | 11 | 12 | 13 |
| Properties | Rolling resistance index | 109 | 112 | 107 | 100 | 110 | 102 | 105 |
| | Wet skid index | 105 | 107 | 103 | 100 | 115 | 100 | 102 |

EMBODIMENT 3

Polyether compounds were synthesized according to the following Preparation Examples. The molecular weight of the synthesized polyether compounds was measured according to GPC using a measuring machine type 150C made by Waters Inc. and two columns Shodex HT-806 and Shodex HT-803 available from Showa Denko K.K. (column temperature: 130°C, moving phase: o-dichlorobenzene). The molecular weight of the synthesized polyether compound was determined as the number average molecular weight (hereinafter referred to as Mn) converted to a polystyrene basis.

PREPARATION EXAMPLE 1

(Polyether compound 1)

In toluene, 50 g of stearyl glycidyl ether was polymerized at 130°C for 12 hours by using samarium alkoxide-methyl almoxane catalyst in an amount of 1 % by mole (based on glycidyl ether, and so forth). The reaction mixture was purified by reprecipitation and white solid polyether compound 1 was obtained. The obtained compound was a modifying agent having a higher alkyl group in the side chain. The compound had a Mn of 290,000. The structure of the compound is shown below:

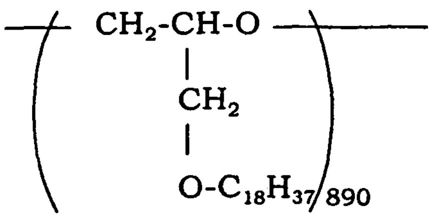

PREPARATION EXAMPLE 2

(Polyether compound 2)

Light yellow solid polyether compound 2 was obtained in the same manner as in Preparation Example 1 except for using 40 g of stearyl glycidyl ether and 10 g of phenyl glycidyl ether instead of 50 g of stearyl glycidyl ether. The obtained compound was a modifying agent having a higher alkyl group and a phenyl group in the side chain. The compound had a Mn of 270,000. The structure of the compound is shown below:

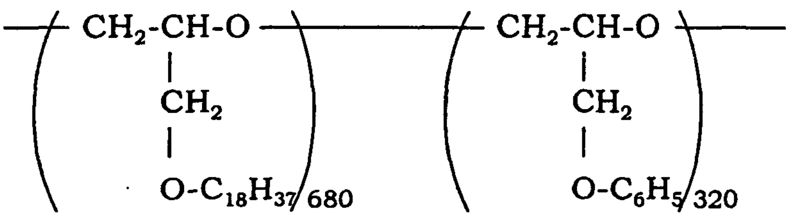

PREPARATION EXAMPLE 3

(Polyether compound 3)

White solid polyether compound 3 was obtained in the same manner as in Preparation Example 1 except for using 40 g of stearyl glycidyl ether and 10 g of allyl glycidyl ether instead of 50 g of stearyl glycidyl ether. The obtained compound was a modifying agent having a higher alkyl group and an allyl group in the side chain. The compound had a Mn of 260,000. The structure of the compound is shown below:

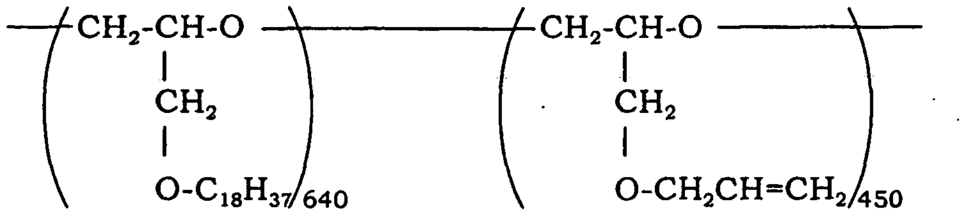

PREPARATION EXAMPLE 4

(Polyether compound 4)

A colorless and transparent soft polymer, i.e., polyether compound 4 was obtained in the same manner as in Preparation Example 1 except for using 40 g of n-butyl glycidyl ether and 10 g of allyl glycidyl ether instead of 50 g of stearyl glycidyl ether. The obtained compound was a modifying agent having a butyl group and an allyl group in the side chain. The compound had a Mn of 130,000. The structure of the compound is shown below:

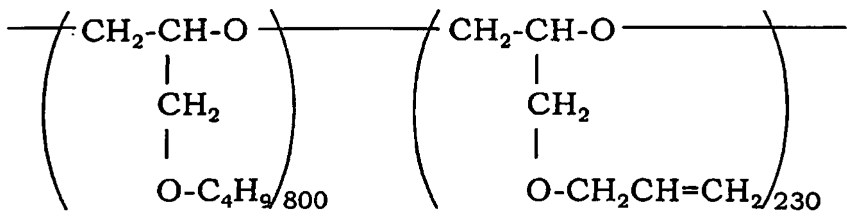

EXAMPLES 1 to 4 and COMPARATIVE EXAMPLES 14 to 19

Components in Table 3 other than sulfur and vulcanization accelerator TBBS and vulcanization accelerator DPG were kneaded at 150°C for 4 minutes. Then, sulfur, TBBS and DPG were added thereto and the mixture was kneaded at roll temperature of 20°C for 5 minutes to obtain samples of the rubber composition. The compounds were press-vulcanized at 170°C for 20 minutes to obtain vulcanized materials. Each of the obtained samples was subjected to the following property tests.

[Tests]

(Abrasion test)

Evaluation was made in the same manner as in Embodiment 1 except that the loss value of Comparative Example 15 was assumed to be 100.

(Rolling resistance index)

Evaluation was made in the same manner as in Embodiment 1 except that the tan δ value of Comparative Example 15 was assumed to be 100.

(Wet skid test)

Evaluation was made in the same manner as in Embodiment 1 except that the measured value of Comparative Example 15 was assumed to be 100.

The results are shown in Tables 3. It is found that the rubber composition of Comparative Example 16 obtained by compounding silica instead of part of carbon black together with a silane coupling agent has inferior reinforcing ability and decreased abrasion resistance though low heat build-up characteristics and grip performance thereof are improved.

It is found that the rubber composition of Comparative Example 17 obtained by compounding calcium carbonate instead of part of carbon black; the rubber composition of Comparative Example 18 obtained by compounding calcium carbonate instead of part of carbon black together with a silane coupling agent; and the rubber composition of Comparative Example 19 obtained by compounding calcium carbonate instead of part of carbon black together with a polyether compound have inferior reinforcing ability and decreased abrasion resistance as well, though low heat build-up characteristics and grip performance thereof are improved.

On the other hand, as to the rubber compositions of Examples 1 to 4 obtained by compounding silica and calcium carbonate instead of part of carbon black together with a silane coupling agent and a polyether compound, improvement of low heat build-up characteristics and grip performance was achieved without lowering abrasion resistance.

TABLE 3

| | | Ex. No. | | | | Com.Ex.No | | Com. Ex. No. | | | |
|---|---|---|---|---|---|---|---|---|---|---|---|
| | | 1 | 2 | 3 | 4 | 14 | 15 | 16 | 17 | 18 | 19 |
| Compound (part by weight) | SBR1502 | 100 | 100 | 100 | 100 | 100 | 100 | 100 | 100 | 100 | 100 |
| | Calcium carbonate | 20 | 20 | 20 | 20 | 20 | - | - | 20 | 20 | 20 |
| | Silica | 10 | 10 | 10 | 10 | 10 | - | 20 | - | - | - |
| | Carbon black | 30 | 30 | 30 | 30 | 30 | 60 | 40 | 40 | 40 | 40 |
| | Si 69 | 1 | 1 | 1 | 1 | 1 | - | 2 | - | 2 | - |
| | Polyether compound 1 | 0.5 | - | - | - | - | - | - | - | - | - |
| | Polyether compound 2 | - | 0.5 | - | - | - | - | - | - | - | 0.5 |
| | Polyether compound 3 | - | - | 0.5 | - | - | - | - | - | - | - |
| | Polyether compound 4 | - | - | - | 0.5 | - | - | - | - | - | - |
| | Aromatic oil | 8 | 8 | 8 | 8 | 8 | 15 | 15 | 8 | 8 | 8 |
| | Antioxidant | 1 | 1 | 1 | 1 | 1 | 1 | 1 | 1 | 1 | 1 |
| | Stearic acid | 2 | 2 | 2 | 2 | 2 | 2 | 2 | 2 | 2 | 2 |
| | Zinc oxide | 3 | 3 | 3 | 3 | 3 | 3 | 3 | 3 | 3 | 3 |
| | Sulfur | 1.5 | 1.5 | 1.5 | 1.5 | 1.5 | 1.5 | 1.5 | 1.5 | 1.5 | 1.5 |
| | Vulcanization Accelerator TBBS | 1 | 1 | 1 | 1 | 1 | 1 | 1 | 1 | 1 | 1 |
| | Vulcanization Accelerator DPG | 0.5 | 0.5 | 0.5 | 0.5 | 0.5 | 0.5 | 0.5 | 0.5 | 0.5 | 0.5 |
| Properties | Abrasion resistance index | 100 | 102 | 100 | 101 | 93 | 100 | 96 | 85 | 89 | 86 |
| | Rolling resistance index | 115 | 118 | 114 | 116 | 113 | 100 | 108 | 111 | 113 | 111 |
| | Wet skid index | 107 | 109 | 107 | 108 | 107 | 100 | 103 | 104 | 105 | 106 |

According to the present invention, low heat build-up characteristics and wet grip performance can be significantly improved without lowering of processability and abrasion resistance by using a particular polyether compound as a filler for the rubber composition in addition to carbon black, silica, calcium carbonate and optionally silane coupling agent.

## Claims

1. A rubber composition for tire tread comprising,

5 to 120 parts by weight of calcium carbonate,
at least 5 parts by weight of silica having nitrogen adsorption specific surface area of 100 to 300 $m^2/g$, and
at least 1 part by weight of carbon black having nitrogen adsorption specific surface area of 70 to 300 $m^2/g$,
based on 100 parts by weight of a rubber component,
said rubber composition further comprising, based on the weight of calcium carbonate, 0.1 to 150 % by weight of a polyether compound having a repeating unit represented by the following formula (II):

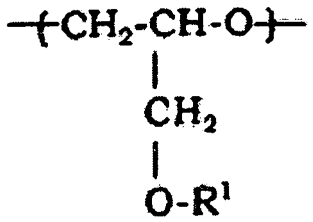

(II)

wherein $R^1$ is a hydrogen atom or a substituent selected from the group consisting of a hydrocarbon group having 1 to 50 carbon atoms, a siloxy silyl propyl group having 1 to 50 silicon atoms and a group represented by the formula $-(AO)_m-R^2$ and $R^1$ may be one kind or different kinds; and in the formula, $R^2$ is a hydrogen atom or a substituent selected from the group consisting of a hydrocarbon group having 1 to 42 carbon atoms and a siloxy silyl propyl group having 1 to 40 silicon atoms, A is an alkylene group having 2 to 3 carbon atoms, m is an integer of 1 to 100 and A, the number of which is represented by m, may be the same or different.

**2.** The rubber composition for tire tread of claim 1, wherein the total amount of calcium carbonate, silica and carbon black is between 50 and 150 parts by weight.

**3.** The rubber composition for tire tread of claim 1, wherein the total amount of silica and carbon black is 50 to 150 parts by weight.

**4.** The rubber composition for tire tread of claim 1, wherein the calcium carbonate has a nitrogen adsorption specific surface area of at least 5 $m^2/g$.

**5.** The rubber composition for tire tread of claim 1, wherein the calcium carbonate has an average particle diameter of 0.01 to 50 μm.

**6.** The rubber composition for tire tread of claim 1, further comprising a silane coupling agent.

**7.** The rubber composition for tire tread of claim 6, wherein the silane coupling agent is used in an amount of 1 to 20 % by weight based on the weight of calcium carbonate and silica.

**8.** The rubber composition for tire tread of claim 6, wherein the silane coupling agent is a silane coupling agent represented by the following formula (I):

$$(C_nH_{2n+1}O)_3\text{-Si-}(CH_2)_m\text{-}S_x\text{-}(CH_2)_m\text{-Si-}(C_nH_{2n+1}O)_3 \quad (I)$$

wherein n is an integer of 1 to 3, m is an integer of 1 to 4 and x is the number of sulfur atoms in the polysulfide part, and an average of x is 2.1 to 4.

**9.** The rubber composition for tire tread of claim 6 obtained by kneading the rubber component, calcium carbonate, silica, carbon black, silane coupling agent and polyether compound simultaneously at kneading temperature of 120° to 200°C.

**10.** A pneumatic tire obtained by using the rubber composition of claim 1 for tire tread.

**Patentansprüche**

1. Kautschukzusammensetzung für eine Reifenlauffläche enthaltend

5 bis 120 Gewichtsteile Calciumcarbonat,
wenigstens 5 Gewichtsteile Silika mit einer durch Stickstoffadsorption gemessenen spezifischen Oberfläche zwischen 100 und 300 $m^2/g$ sowie
wenigstens 1 Gewichtsteil Ruß mit einer durch Stickstoffadsorption gemessenen spezifischen Oberfläche zwischen 70 und 300 $m^2/g$,
basierend auf 100 Gewichtsteilen einer Kautschukkomponente,
wobei die Kautschukzusammensetzung des weiteren, basierend auf dem Gewicht des Calciumcarbonats, 0,1 bis 150 Gewichtsprozent einer Polyetherverbindung mit einer Wiederholungseinheit enthält, welche durch die nachfolgende Formel (II) dargestellt ist:

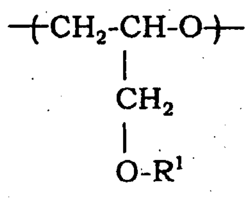

(II)

worin $R^1$ ein Wasserstoffatom oder ein Substituent ausgewählt aus der Gruppe bestehend aus einer Kohlenwasserstoffgruppe mit 1 bis 50 Kohlenstoffatomen, einer Siloxysilylpropylgruppe mit 1 bis 50 Siliziumatomen sowie einer Gruppe wiedergegeben durch die Formel $-(AO)_m-R^2$ ist und $R^1$ gleich oder verschieden sein kann, und worin in der Formel $R^2$ ein Wasserstoffatom oder ein Substituent ausgewählt aus der Gruppe bestehend aus einer Kohlenwasserstoffgruppe mit 1 bis 42 Kohlenstoffatomen und einer Siloxysilylpropylgruppe mit 1 bis 40 Siliziumatomen ist, A eine Alkylengruppe mit 2 bis 3 Kohlenstoffatomen ist, m eine ganze Zahl zwischen 1 und 100 ist und A, dessen Anzahl durch m wiedergegeben wird, gleich oder verschieden sein kann.

2. Kautschukzusammensetzung für eine Reifenlauffläche nach Anspruch 1, wobei das Gesamtgewicht von Calciumcarbonat, Silika und Ruß zwischen 50 und 150 Gewichtsteile beträgt.

3. Kautschukzusammensetzung für eine Reifenlauffläche nach Anspruch 1, wobei die Gesamtmenge an Silika und Ruß 50 bis 150 Gewichtsteile beträgt.

4. Kautschukzusammensetzung für eine Reifenlauffläche nach Anspruch 1, wobei das Calciumcarbonat eine durch Stickstoffadsorption gemessene spezifische Oberfläche von wenigstens 5 $m^2/g$ aufweist.

5. Kautschukzusammensetzung für eine Reifenlauffläche nach Anspruch 1, wobei das Calciumcarbonat einen durchschnittlichen Partikeldurchmesser zwischen 0,01 und 50 $\mu m$ aufweist.

6. Kautschukzusammensetzung für eine Reifenlauffläche nach Anspruch 1, des weiteren enthaltend ein Silankupplungsmittel.

7. Kautschukzusammensetzung für eine Reifenlauffläche nach Anspruch 6, wobei das Silankupplungsmittel in einer Menge zwischen 1 und 20 Gewichtsprozent basierend auf dem Gewicht von Calciumcarbonat und Silika eingesetzt wird.

8. Kautschukzusammensetzung für eine Reifenlauffläche nach Anspruch 6, wobei das Silankupplungsmittel ein durch die nachfolgende Formel (I) dargestelltes Silankupplungsmittel ist:

$$(C_nH_{2n}+_1O)_3\text{-Si-}(CH_2)_m\text{-}S_x\text{-}(CH_2)_m\text{-Si-}(C_nH_{2n}+_1O)_3 \qquad \text{(I)}$$

worin n eine ganze Zahl zwischen 1 und 3 ist, m eine ganze Zahl zwischen 1 und 4 ist und x die Anzahl von Schwefelatomen in dem Polysulfidteil ist und der Durchschnitt von x 2,1 bis 4 beträgt.

**9.** Kautschukzusammensetzung für eine Reifenlauffläche nach Anspruch 6 erhalten durch gleichzeitiges Kneten der Kautschukkomponente, von Calciumcarbonat, von Silika, von Ruß, des Silankupplungsmittels und der Polyetherverbindung bei einer Knettemperatur zwischen 120 °C und 200 °C.

**10.** Luftreifen erhalten durch Verwenden der Kautschukzusamrriensetzung nach Anspruch 1 in der Reifenlauffläche.

**Revendications**

**1.** Composition de caoutchouc pour bande de roulement pneumatique comprenant,

5 à 120 parties en poids de carbonate de calcium,
au moins 5 parties en poids de silice ayant une aire de surface spécifique de l'adsorption de l'azote de 100 à 300 $m^2$/g, et
au moins 1 partie en poids de noir de carbone ayant une aire de surface spécifique de l'adsorption de l'azote de 70 à 300 $m^2$/g,
sur la base de 100 parties en poids d'un composant caoutchouc,
ladite composition de caoutchouc comprenant en outre, sur la base du poids du carbonate de calcium, 0,1 à 150 % en poids d'un composé de polyéther ayant une unité récurrente représentée par la formule suivante (II) :

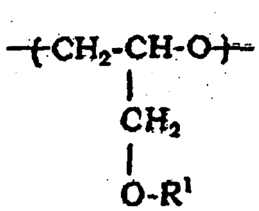

(II)

dans laquelle $R^1$ est un atome d'hydrogène ou un substituant sélectionné dans le groupe constitué d'un groupe hydrocarbure ayant de 1 à 50 atomes de carbone, un groupe siloxysilylpropyle ayant 1 à 50 atomes de silicium et un groupe représenté par la formule - $(AO)_m$-$R^2$ et $R^1$ peut être d'un type ou de différents types ; et dans la formule, $R^2$ est un atome d'hydrogène ou un substituant sélectionné dans le groupe constitué d'un groupe hydrocarbure ayant de 1 à 42 atomes de carbone, un groupe siloxysilylpropyle ayant 1 à 40 atomes de silicium, A est un groupe alkylène ayant de 2 à 3 atomes de carbone, m est un entier de 1 à 100 et A, dont le nombre est représenté par m, peut être identiqué ou différent.

**2.** Composition de caoutchouc pour bande de roulement pneumatique selon la revendication 1, dans laquelle la quantité totale de carbonate de calcium, de silice et de noir de carbone est entre 50 et 150 parties en poids.

**3.** Composition de caoutchouc pour bande de roulement pneumatique selon la revendication 1, dans laquelle la quantité totale de silice et de noir de carbone est de 50 à 150 parties en poids.

**4.** Composition de caoutchouc pour bande de roulement pneumatique selon la revendication 1, dans laquelle le carbonate de calcium a une aire de surface spécifique de l'adsorption de l'azote d'au moins 5 $m^2$/g.

**5.** Composition de caoutchouc pour bande de roulement pneumatique selon la revendication 1, dans laquelle le carbonate de calcium a un diamètre de particules moyen de 0,01 à 50 $\mu$m.

**6.** Composition de caoutchouc pour bande de roulement pneumatique selon la revendication 1, comprenant en outre un agent de couplage au silane.

**7.** Composition de caoutchouc pour bande de roulement pneumatique selon la revendication 6, dans laquelle l'agent de couplage au silane est utilisé en une quantité de 1 à 20 % en poids sur la base du poids du carbonate de calcium et de la silice.

**8.** Composition de caoutchouc pour bande de roulement pneumatique selon la revendication 6, dans laquelle l'agent

de couplage au silane est un agent de couplage au silane représenté par la formule suivante (I):

$$(C_nH_{2n+1}O)_3\text{-Si-}(CH_2)_m\text{-}S_x\text{-}(CH_2)_m\text{-Si-}(C_nH_{2n+1}O)_3 \qquad (I)$$

dans laquelle n est un entier de 1 à 3, m est un entier de 1 à 4 et x est le nombre d'atomes de soufre dans la partie polysulfure et une moyenne de x est 2,1 à 4.

**9.** Composition de caoutchouc pour bande de roulement pneumatique selon la revendication 6, obtenue par malaxage du composant caoutchouc, du carbonate de calcium, de la silice, du noir de carbone, de l'agent de couplage au silane et du composé polyéther simultanément à une température de malaxage de 120° à 200°C.

**10.** Pneumatique obtenu en utilisant la composition de caoutchouc de la revendication 1 pour la bande de roulement pneumatique.